# EUROPEAN PATENT SPECIFICATION

(11) **EP 0 230 899 B1**
(45) Date of publication and mention of the grant of the patent: **26.01.1994**
(21) Application number: 87100332.3
(22) Date of filing: 13.01.1987
(51) Int. Cl.: G01N 15/02, G01N 30/38, B03B 5/00, B01D 43/00, B01D 21/00, B03B 5/62

(54) **Thin channel split flow process and apparatus for particle fractionation**
Verfahren zur Trennung einer Strömung mittels feiner Kanäle und Anlage zur Fraktionierung von Festteilchen
Procédé de fractionnement d'un courant dans des canaux étroits et le dispositif pour fractionner des particules

(30) Priority: 27.01.1986 US 822529
(43) Date of publication of application: 05.08.1987
(73) Proprietor: THE UNIVERSITY OF UTAH, Salt Lake City, Utah 84108 (US)
(72) Inventor: Giddings, John C., Salt Lake City Utah 84108 (US)
(74) Representative: Grünecker, Kinkeldey, Stockmair & Schwanhäusser Anwaltssozietät

(56) References cited:
- EP-A- 0 049 055
- US-A- 3 449 938
- US-A- 4 102 780
- US-A- 4 147 621
- US-A- 4 214 981
- US-A- 4 250 026
- US-A- 4 284 498
- EUROPEAN CHROMATOGRAPHY NEWS, vol.2, no.1, 1988, pages 12-15; K.-G. WAHLUND: "Field-Flow Fractionation"

## Description

### BACKGROUND OF THE INVENTION

### 1. Field of the Invention

This invention relates to a new process for particle fractionation. More particularly, the invention relates to a new process for the separation of particles or molecules according to size or to other physical characteristics, and to a new type of apparatus for accomplishing the same.

Specifically, the invention provides a new continuous process for rapid and efficient particle separation.

### 2. Prior Art

There is a growing need in industry for the separation of particles including both cell-size particles and those of submicron and macromoleculear size, such as various viruses, latices and polymers. Various methods have been proposed, but in general, they have been too slow, too low in throughput, inefficient, expensive or have failed to effect the separation with the desired degree of resolution needed for commercial operations.

Some of the best techniques disclosed have been those based on field-flow fractionation as disclosed in U.S. patents No. 3,449,938, U.S. 4,147,621 and U.S. 4,250,026. Other references include Giddings, Anal. Chem. 57 945 (1985), and Giddings et al-Sep. Science and Tech. 18(3) 293-306 (1983). These prior known methods, however, are limited in throughput as they are batch techniques that do not operate normally on a continuous basis. They are designed as analytical-scale techniques and they fail to resolve adequate quantities of material needed for many applications. Another method, which operates on a continuous basis, is disclosed in US-A-4,102,780.

It is an object of the invention, therefore, to provide a new and efficient process for particle fractionation. It is a further object to provide a new process for separation of particles from fluid media which can be accomplished in a rapid and efficient manner. It is a further object to provide a new process for particle fractionation which permits high resolution of separation. It is a further object to provide a process for separation of particles from fluid media which can be operated in a continuous manner. It is a further object to provide a new process for particle fractionation which permits separation on a single pass through the apparatus. It is a further object to provide a new separation process for particles which is economical to operate and uses inexpensive equipment. It is a further object to provide a new type of separation channel or cell which can be operated singly or in combination with other cells.

It is a further object to provide a new split flow thin separation cell which gives superior unexpected results in the separation of particles. These and other objects will be apparent from the following detailed description thereof.

### SUMMARY OF THE INVENTION

It has now been discovered that these and other objects may be accomplished by the net process of thee present invention which comprises a rapid and very efficient continuous process for separation of particles,

The new process of the present invention broadly comprises a continuous process for fractionating small particles and molecules in, and collecting fractions from, a special separation cell or channel formed between a set of large opposing walls laterally enclosed by a sidewall structure including an end set of walls comprising an inlet end wall and an outlet end wall, thickness of the channel measured between the large opposing walls being very thin compared to the other two dimensions, comprising; continuously introducing two or more fluid substreams of different composition into two or more inlet ports at the inlet end of the channel, bringing the substreams into contact with adjacent substreams so as to collectively form a series of thin laminae flowing parallel to one another and parallel to the surfaces of the large opposing walls of the channel and in contact with one another over a sufficient length of channel to allow a desired level of mass transport between and through the laminae, without substantial hydrodynamic mixing between the laminae, to realise the fractionation of particles and molecules along a coordinate axis extending between the set of large opposing walls of the channel; continuously introducing a fluid medium containing the particles to be separated as one or more of the entering fluid substreams and varying the fluid composition of the non-particle containing substream as needed to realise separation; at the outlet end of the channel splitting the collective channel stream along a plane parallel to the set of large opposing walls into another set of laminae which are then withdrawn from the channel outlet as individual substreams so as to permit separate recovery of particle fractions separated within the channel into different laminae; continuously removing the individual substreams discharging from the channel; and during the separating process subjecting the channel to one or more transverse driving forces or gradients having a component perpendicular to the plane of the flow stream in the channel and being selected from the group consisting of gravitation, centrifugation, electrical forces, crossflow forces, temperature gradients, density gradients and concentration gradients, and combinations thereof.

It has been surprisingly found that this process solves many of the defects of the prior known techniques and presents for the first time a very efficient process for separation of particles and molecules. The process can be operated on a continuous basis while most prior known techniques have been limited to batch operations. The new process is very time efficient and effects the separation on a single rapid pass through the channel or through a series of such channels, while prior known techniques sometimes require many repeated operations to obtain the desired separation. Further, the new process effects a very high degree of resolution for a continuous method. An additional advantage of the new process is that it is effective not only for separating two different types of particles but is also effective in separating in a single continuous operation a number of different types of particles. Furthermore, the separation process is very economical in operation as it involves inexpensive equipment with low cost operation and maintenance.

Particularly superior results in the separation of particles is obtained by an embodiment of the process wherein there are splitter means at the inlet end and at the outlet end and the substreams are adjusted at the inlet and the outlet such that the ratio of flow rates in the upper substream relative to the lower substream is greater at the outlet than at the inlet.

As used herein, the expression "upper" refers to the side of the channel into which the particle-containing substream is introduced,and the "lower" refers to the side in which the faster moving particles collect.

Superior results are also obtained by a further special embodiment involving a process for separation of particles linking two or more of the above-noted cells in series or in other arrangements wherein the cells are joined by fluid streams in which one or more of the outlet substreams from one channel or cell is fed to one or more of the inlet substreams of another channel or cell or of more than one cell as described in detailed hereinafter.

The new process of the invention is conducted in a newly designed and quite different type of separation apparatus or cell which comprises one or more special split flow thin separation cells which permits one to effect the above-noted rapid and efficient separation or fractionation of particles. The apparatus of the present invention for separating small particles into desired fractions consists of a separation cell or channel comprising the features as set out in claim 11.

As special embodiments, the invention provides variations of the above-noted apparatus wherein there are one or more inlet port means and outlet port means at the ends or along the length of the channel, and one or more splitter means at both ends or along the length of the cell or channel.

As a further embodiment as to the apparatus, the invention provides one or more of the above-noted cells joined either in parallel or in series or other arrangement to effect an even more efficient separation of the particles from one another.

### DESCRIPTION OF THE DRAWINGS

The various objects and features of the present invention will be more fully understood by reference to the accompanying drawings. Figure 1 is a perspective view of the thin elongated flow channel in this case constructed as a sandwich of individual layers of the type to be used in the process of the invention. Figure 2 is a side or edge view of the thin channel indicating in schematic form the placement of the inlet and outlet port means and the physical splitter means at the outlet end of the channel. Figure 3 is a side or edge view of the thin channel indicating in schematic form the placement of the inlet and outlet port means and physical splitter means at both the inlet and outlet ends of the channel. Figure 4 is a top view of the thin channel indicating the cut-out used for the bottom spacer of the three spacers used to obtain the channel volume and the location of the physical splitter means at the inlet and outlet ends of the channel. Figure 5 is a side view of the thin channel illustating the use of the physical splitter means at the inlet and outlet as well as the intermediate splitters in the interior. Figure 5a shows separate cells linked together. Figure 6 illustrates the presence of a series of m-1 physical splitter means within the interior of the channel. Figure 7 is a side view of the thin channel illustrating a variation in the structure of the physical splitter means. Figure 8 is a side view of the outlet end of the channel illustrating the use of four outlet means. Figure 9 is a top view of the thin channel illustrating the use of a series of inlet and outlet means as well as a series of physical splitter means. Figure 10 is a side view of the channel showing the use of mutiple physical splitter means at the outlet end of the channel.

### DESCRIPTION OF THE PROCESS

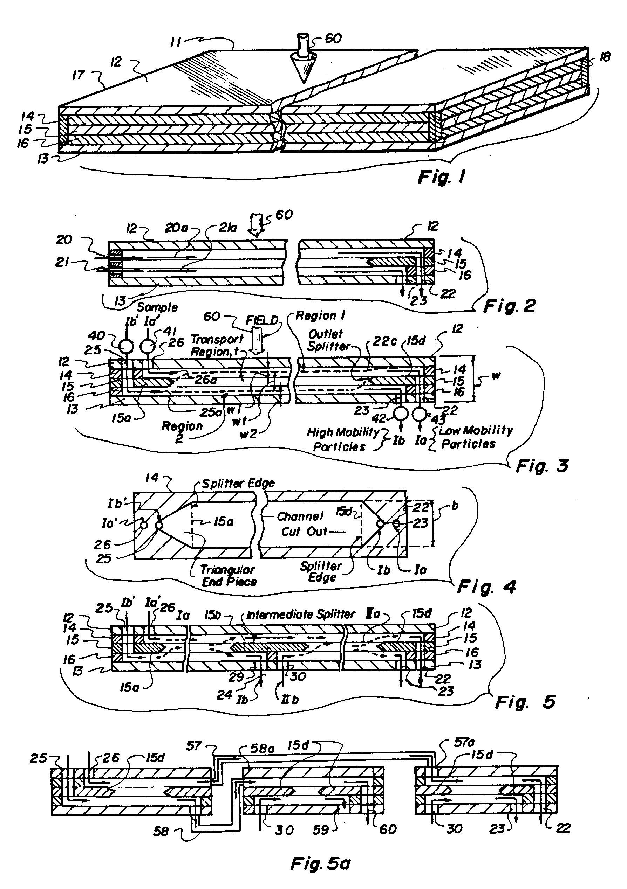

As used herein "channel" and "cell" are used to mean the same thing. They refer to a single relatively homogeneous separation unit with their own inlet and outlet port(s) and physical splitter mean(s). As shown in fig. 5,6 and 7, several cells or channels can be contained in sequence in the same physical structure, or can be separate physical structures as in Figure 5a.

With reference to Figure 1, the thin elongated channel or cell 11 comprises a top 12, bottom 13, inlet end 17 and outlet end 18, and spacer layers 14, 15 and 16 needed to create the desired channel volume. The presence of the transverse driving force or gradient is shown at 60 and is applied over the entire wall.

In the operation of the process, the fluid substream containing the particles to be separated is introduced at one of the inlet ports, e.g. 20 in Figure 2, to form lamina 20a, and a separate fluid substream introduced at inlet 21 to form lamina 21a. The particles are carried the length of the cell or channel where they are subjected more or less continuously to the field force 60 and undergo fractionation along the coordinate between walls 12 and 13. At the outlet end of the channel, the stream is split by splitter 15d to form the upper substream containing the low mobility particles which substream is removed at outlet 22, and form a lower substream containing the high mobility particles which substream is removed at the lower means 23.

It should be noted that while physical splitter means, such as 15d, are used to aid in the splitting of the substreams, the same effect can sometimes be obtained by using different outlet ports properly placed at the outlet end of the cell or channel. In a generic sense, splitter means as used herein refers to all such means, while "physical"splitter means refers to the actual physical separation means as shown by 15d.

In the operation of the process using apparatus shown in Figure 3, the fluid substream containing the particles to be separated is introduced at inlet means 26, and on striking physical splitter means 15a fans out into a thin laminar layer 26a. A separate fluid substream is introduced at 25 and emerges from under physical splitter means 15a as another laminar layer 25a. As the sample particles are carried the length of the channel, the transverse driving force or gradient 60 applied in a direction perpendicular to the flow axis and to the planes of the laminae effects the migration of the particles from the upper laminar layer, constituting region 1, called the imput region, towards region 2, called the collection region. If the applied force is gravitational or centrifugal, the larger (and/or denser) particles will successfully realize this transfer, while the smaller particles will not, as this is the basis of the separation.

In the preferred operation of the apparatus as shown in Figure 3, the substreams are adjusted by use of pumps 40, 41 at the inlet and flow controls 42 and 43 at the outlet. The adjustment is made such that the ratio of flow rates in the upper substream relative to the lower substream is greater at the outlet than at the inlet. This adjustment creates a cross-over flow, in which part of the fluid of the lower inlet substream 25a finds its way into the upper outlet substream 22c. This fluid transfer creates a critical buffer zone which is called the transport region, shown as region t in Figure 3. With this region established by the unequal flow ratio, particles are not able to successfully reach region 2 and thus exit in the lower outlet substream 23 unless transport is completed across the thin transport zone. Without the unequal inlet/outlet splitting ratio, crossover flow and thus transport region t would disappear. In this case, particles entering at the bottom of input region 1 would easily and almost instantaneously transfer into the adjacent collection region 2 and thus exit from 23. Particles of the same kind entering at the top of region 1, however, would need a much greater time to reach region 2 because they would require transport the full distance across region 1. The signnificant difference in the time required for identical particles, entering at different positions within region 1, to transport into region 2 would lead to a loss of selectivity. The interposition of transport region t, by contrast, would establish more or less equal transport path across which all particles would need to pass in order to reach region 2 and exit 23.

The principle upon which transport region t is established in the channel is illustrated by the dashed boundary lines (actually, boundary planes) between the labeled regions. These boundary lines coincide with very specific streamlines or streamplanes of fluid flow. The upper boundary line follows the streamlines dividing the laminae formed by the upper and lower inlet substreams. Thus, if the entering sample particles underwent no transport relative to the fluid but simply followed their respective flow lines, all the incoming particles would stay in region 1, remaining above the upper boundary plane.

The boundary planes may swerve up or down near the active edges of the channel splitters. These deflections are transient, resulting from the brief transition from one steady-state flow condition to another near the splitter edges. These transients will have little effect on separative transport. The principle separative transport occurs in the body of the cell, where the streamplanes maintain a stationary position which depends upon the ratio of flow rates in upper and lower substreams. Normally one would use a higher flow rate through entry means 25 than entry means 26 in order to force the upper boundary plane to curve upward to a stationary position closer to the top than to the bottom wall. This compresses the imput region,which provides the narrow initial sample zone required for satisfactory resolution.

The lower boundary plane, by contrast, divides the channel into two regions according to where the fluid elements exit rather than enter. Because of the unequal flow rate ratios noted above, a substantial fraction of the fluid introduced into the bottom inlet substream 25a will emerge in the upper outlet substream 22c. This layer of fluid occupies region t of the figure. Any particle which is to reach region 2, and thus be carried out of exit 23, must traverse this layer, which therefore constitutes a critical transport region within the channel. By proper adjustment of flow rates, this transport region can be made considerably thicker than region 1, thus making the particle's starting position from within region 1 of little consequence. This strategy enhances the sharpness of the separation.

In well-designed channels, the boundary streamplanes should lie parallel to the axis of the channel throughout all of the channel except in the very narrow transient zone in the immediate vicinity of the splitting edges of inlet and outlet physical splitters. The transport region is thus well defined by these two parallel boundary planes, and the above transport processes should be well behaved, reproducible, and calculable.

Thus use of a thin channel in the above configuration has several advantages. First of all, the thickness wₜ of the transport region is scaled to the channel thickness w and is therefore smaller in thin channels. This leads to rapid transport across region t. Secondly, separative transport across the thin dimension is relatively free of distortion. Thirdly, the thin-channel configuration is a stabilizing influence against convention. Convection must be guarded against, especially in the case where a concentrated stream of dense sample particles is introduced into sample stream 2. However, additional stabilization against convection can be provided by adding to the carrier stream some unobstrusive solute (such as sucrose) that will increase the fluid density in the lower part (or other selected parts) of the flow channel.

The one cell system described above, requiring binary inlet and outlet splitting, will normally be constructed with three thin films of spacer material, one film for each of the two entering and exiting flow conduits and another for the stream-splitting element between them. Other means, however, might be found for introducing thin splitting elements into the ends of the channel and in some case splitting means may not be required, the stream splitting being accomplished by the careful placement of outlet ports. The upper and lower split-flow conduits will normally converge to a point as shown in Figure 4 for convenient introduction and withdrawal of the various substreams. As shown in Figure 4, which is a top view of the channel, the point of introduction and outlet is normally located at the apex of the triangle-like end pieces.

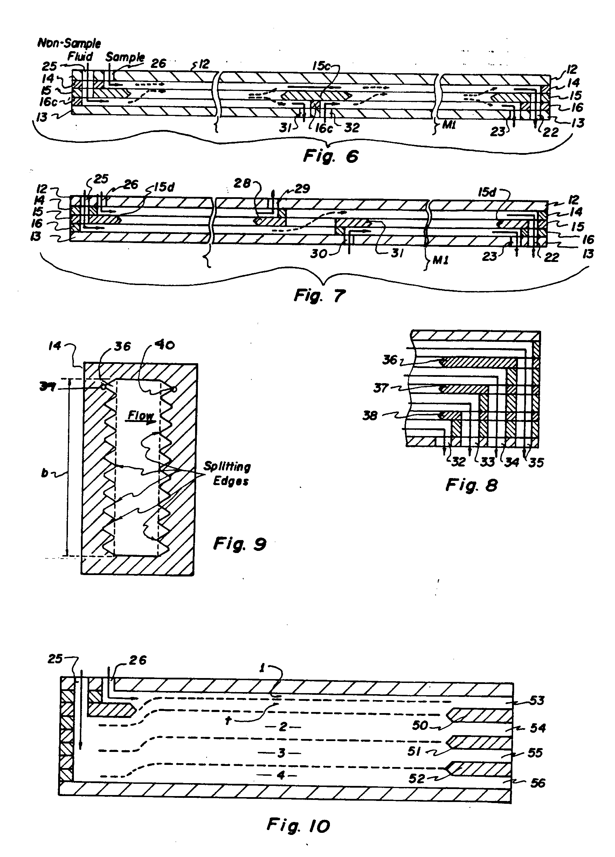

If desired, a larger number of fractions can be simultaneously and continuously collected by using a multi-split outlet. A channel with this type of outlet is illustrated in Figure 10 showing the use of multiple splitters 50, 51 and 52 to form multiple outlets 53, 54, 55 and 56. Cross-over flow, with a resulting transport (t) zone, is used to advantage here as well as in the binary-split system. Cross-over flow, as before, reduces the thickness of the initial sample zone and thus improved resolution. (Substreams are shown as 1,2,3 and 4.) The transport zone greatly sharpens the resolution between the particle populations collected in substreams 53 and 54. While the multi-split outlet system could be used without crossover flow, the resolving power would be reduced equal to the low of one outlet unit.

A channel with the outlet split into n channels for the collection of n fractions would require 2n-l spacer elements, as suggested by Figure 10, thus spacer elements for 50, 51, 52, 53, 54, 55 and 56. A multi-split inlet with up to n flow elements can be simultaneously used to introduce density or pH gradients, if desired. Such gradients can be used for quasi steady-state operation, yielding continuous and rapid separation based on the same underlying steady-state mechanism as used for isopycnic sedimentation and isoelectric focusing.

The dimensions of cells with multi-split outlets and/or inlets might vary widely. However, it is important that the channel thickness w remain small for rapid mass transport and laminar flow; it is also essential that w « b (b=channel breadth) to avoid excessive edge effects. Edge effects could be eliminated altogether by some form of sheath flow. An example of a channel with a relatively large w would be one with flow split into n=10 outlet streams, requiring 2n-l=19 spacer layers. If each layer were 100 µm (approx. 0.004 in) thick, w would be 1.9 mm. This w would work best with a breadth b of 2 cm or more to satisfy the condition w « b. Length L would probably lie in the range 2-50 cm, but might be longer. Channel thinner than 1.9 mm could be made with thinner spacer layers (although flow-space and splitter uniformity would be harder to maintain) or with smaller n, or both. Binary-split cells (n=2) would tend to be thinner (e.g. 3 x100 µm=300µm) than multi-split cells.

A preferred system necessary to handle the various streams flowing out of (or into) a multi-split end is illustrated in Figure 8 wherein the multiple splitters are shown as 36, 37 and 38 and the outlet ports shown as 32, 33, 34 and 35. Here the individual flow streams would exit (or enter) the channel via narrow conduits or slits passing through the other spacer layers and out one of the two walls. Normally, each stream would converge to the apex of a triangular end piece before exiting for convenience. Once outside the channel, each stream might flow through a segment of narrow tube or other flow restrictor for flow control. By varying the relative resistance of the restrictors, different fractions could be shifted up and down the array of exit ports to optimize fraction purity.

The throughput of the different cells described above will be relatively high despite the small cell volumes because of the short transit times and the continuous operation. Throughput can be increased further by using banks of such channels working in parallel or by increasing channel breadth. Excessive channel breadth (for example, b > L), however, might lead to non uniform flow and thus nonconstant transit times because of disturbances originating in broad triangular end pieces. This problem can be remedied by using a series of triangular inlets and outlets, each of moderate breadth, for a single cell of considerable breadth, as illustrated in Figure 9. In Figure 9, the inlet means is illustrated by 39 and the outlet means by 40. The edge of the splitter means is illustrated by 36.

The single-channel systems described above can be expanded in another way to achieve the separation of multiple fractions instead of just two. Instead of using a multi-split outlet to a single cell, one can use a number of binary-split (or simply binary) separation cells or other related cell types to form a serial array of cells along the main flow axis. This is illustrated for 2 linked cells by Figure 5. In this figure, the flow stream encounters an intermediate (rather than terminal) splitter 15b after the first binary separation cell. The intermediate splitter shunts the lower (high mobility) stream 1b out of the channel port 29 for collection but retains the upper (low mobility) stream 1a, simply transfering it through the splitter region to emerge as sample input stream IIaʹ for the second binary separation unit. This stream is then joined by a new fluid stream IIbʹ at input means 30 to establish the conditions, including adequate cross over flow, necessary for another binary separation. The length of the second separation cell and the flow rates of carrier streams IIbʹ and to some extent IIa, can be adjusted to achieve separation around another critical value of mobility, different from that utilized to divide the particle population in the first flow cell. If the cutoff value m_{c} of the generalized mobility (e.g. sedimentation coefficient in the case of a sedimentation field) in the second unit is adjusted to be slightly below that in the first, a narrow fraction of particles having mobilities between the two cutoff values will emerge in stream IIb. Streams 1b and IIa would contain the high-mobility and low mobility tails, respectively. With further adjustments, the original sample would be divided into different mobility ranges among the three outlet streams 1b, IIb and IIa.

Separations of higher order than ternary could be achieved by adding additional intermediate splitters as suggested by figure 6. In that figure m may be 2 or any no. greater than 2, and 31 illustrates the outlet means and 32 the inlet means for each of such additional units and intermediate splitter 15c.

A system of linked cells with an alternate form of intermediate splitter is illustrated in Figure 7. This figure shows the presence of intermediate splitter 28 with 29 the outlet port. 30 represents the new inlet port and 31 the new intermediate splitter.

A system of linked cells each contained in a different structural unit is illustrated in Figure 5a wherein 57 represents a conduit to carry the upper stream to a third cell unit at opening 57a, 58 is a conduit to carry the lower substream to the top of a second cell at opening 58a and 30 is the inlet port for a new substream. The upper substream of the second cell is removed at opening 60 and the lower substream of that cell is removed at port 59. In the third cell, the upper substream is removed at port 22 and the lower substream is removed at port 23.

The above examples barely begin to illustrate the numerous possibilities with linked-cell systems. Different separation cells can be distributed as desired over an extended 3-dimmensional matrix. The matrix, by way of example, could be formed from a large number of thin spacer layers, each with sections cut-out in such a manner that the interconnected cells are formed in proper relationship to one another. Different substreams from one cell could, for example, be diverted sideways to different locations, each to enter its own cell or series of cells specially designed for processing that substream. Thus various sample containing streams and substreams could be divided, merged with other streams, recirculated, and/or introduced at different levels of either multi-split or binary-split cells. In short, the sample-containing streams could be directed through mazes of cells of arbitrary structure and complexity. This design freedom would be supported by the natural versatility of"plumbing" in thin-cell systems composed of multilayers of thin spacer material. Substreams could cross one another at different levels and they could pass through small aperatures in other layers to reach different lateral positions. In general, they could conduct fractions around rather freely over the 3 dimensional structure containing the various split cells.

It is possible to establish conditions such that different components will approach different steady-state distributions across the lateral coordinate. These distributions-or distributions approaching the steady state- can be converted into continuous separation using split-flow channels much as before. Again, the short lateral coordinate will greatly hasten the approach to steady-state, thus increasing fractionation speed and throughput.

### DETAILS OF THE INVENTION.

The type and size of the particles to be separated may vary over a wide range depending on flow conditions and the type and strength of field applied. The particles may be as small as polypeptides and as large as biological cells. Preferably, when gravity is the force field, the particles range in size from about 1 µm to 100 µm. The particles may also vary as to density and shape, and the conditions of the separation process will be adjusted accordingly.

The fluid in which the particles to be separated are contained may also vary over a wide range. In most cases, the fluid will be that in which the particles are normally prepared or contained, such as aqueous buffers for biological particles. In other cases, the particles are contained in specially prepared fluids or solutions in which the density, pH or other fluid characteristic is controlled in order to optimize the separation.

The fluid substream(s) introduced at the inlet end which do not contain the particles may also be varied or may contain modifiers (such as density modifiers) to increase resolution and throughput. The fluid may be any liquid, such as water, etc.

The concentration of the particles in the starting fluid medium may also vary widely from extreme dilutions up to about 20% or more. In most cases, the concentration will vary from about 0.1% to about 5%.

The special transverse driving forces or gradients used in the process of the invention are singly or in combination forces or gradients which effect movement of particles at different rates, or effect movement to different transverse equilibrium or quasi-equilibrium positions. A component of each force or gradient utilized is applied perpendicular to the plane of the stream flow. The forces and gradients include, among others, sedimentation forces, such as caused by gravitation and centrifugation, electrical forces, cross flow forces, thermal gradients, density gradients, concentration gradients, and the like. Combination of one or more forces or gradients can be used as desired or needed. Preferred forces include sedimentation forces, such as caused by gravitation and centrifugation, and concentration and cross flow gradients. A particularly preferred field force includes the use of gravity where the channel is formed in a rectangular configuration as shown in Figure 1 with the large sidewall surfaces oriented perpendicular to the gravitational force.

The strength of the force or gradient applied to the channel may vary depending upon factors, such as particle mobility, thickness of separation cell, fluid density, diffusion coefficient,etc. and is best determined for each individual case. Generally, the highest practical field strength is preferred because throughput usually increases with field strength.

The temperature employed in the separation process may vary over a wide range, but generally will range between about 0°C. and 25°C.

The rate of introducing the above-noted substreams,some containing the particles and some not, may vary over a wide range. In general, the rate of introduction of the substreams will vary from about 0.1 ml/min. to about 100 ml/min.

As noted above, superior results are obtained when the rates of introducing the substreams at the inlet and the rates of withdrawal of the outlet streams are adjusted such that the ratio of flow rates in the upper substream relative to the lower substream(s) (as defined hereinabove) is greater at the outlet than at the inlet. This adjustment of the rate is conveniently accomplished by use of suitable pumping means.

The particle fractions obtained by the above-noted process will be recovered at the various outlet means in the form of fluid solutions or suspensions, which may be used directly as such or which may be subjected to further separation means, such as centrifugation or evaporation, to recover the particles themselves.

The apparatus to be used in the process of the invention may be constructed in a variety of ways with a variety of different materials and sizes as long as it provides the channel of the necessary thickness, the desired number of inlet and outlet means, the desired number of splitter means, pumping means, flow control means, and means for applying the desired transverse driving force or gradient.

The thickness of the channel along which dimension the separation takes place must be very thin compared to the other two dimensions, and preferably less than a few millimeters. Particularly good results are obtained when the thickness varies from about 100 micrometers to about one millimeter.

The length and breadth of the channel may vary over a wide range as long as the thickness noted above is mentioned. Increasing the length and breadth is desirable to increase throughput.

The channel should possess at least one inlet means for introducing the fluid substream containing the particles to be separated. Such means, which may be ports or holes with or without pump means, may be located at the top of the inlet end or at the end of the separation cell as desired for the creation of the necessary substreams.

The channel should also possess at least one inlet means for introducing particle-free substream(s). These means, which also may be ports or holes with or without pump means, may be located at the bottom of the inlet end or at the end of the separation cell as desired for the creation of the desired substream(s). As noted, these means may include pump means which may be controlled manually or automatically.

The channel may also possess at least one splitter means at the outlet end of the channel, and in some cases a plurality of such splitter means at the outlet end depending upon the intended operation of the channel. Preferably, such splitter means at the outlet end may vary from about 1 to 6.

For improved results, the channel may also possess at least one splitter means at the inlet end of the channel again depending upon the intended operation of the channel.

For further improved results, one may also locate splitter means at intermediate locations along the length of the channel as shown in Figs.5, 6 and 7. These splitter means may also vary from about 1 to 6 or more in number depending on the intended operation of the channel.

The splitter means, at the outlet, inlet and along the length of the channel may be of any desired shape and size as long as they accomplish the purpose of splitting the channel stream into physically distinct laminae.

As noted hereinabove, the generic expression "splitter means" refers to all such means, including specially placed outlet ports, physical barriers, and the like. The expression "physical" splitter as used herein refers to the actual physical barrier as shown by 15d in Figure 1.

The preferred physical splitters are preferably prepared from very thin material, such as plastic or metal sheeting and extend preferably only a short distance into the cell, e.g. 1-5 cm. They preferably extend through the tapered or triangular end regions of the cell so as to facilitate a clean separation of laminae.

The channel may be constructed of various thin spacer layers of various materials from which regions are cut out to create the space for the movement of the substreams through the channel. As noted above, for the creation of n channel outlets for the collection of n fractions one would need 2n-l spacer elements. Thus, for the creation of outlets for two substreams, one would need three spacer elements. These elements may be cut to different shapes and sizes as long as they provide a uniform channel and they effect the desired division of the channel end regions into the proper number of stream corridors. In most cases it is desirable to cut triangular shaped pieces from the ends of some of the spacers to permit a smooth transition from the channel flow to the narrow inlets and outlets at the apices of the triangles as shown in Figure 4.

The channel top, bottom and end walls as well as the spacer elements and splitters may be constructed of any suitable material. For small operations, they are preferably prepared from thin plastic materials, such as mylar, teflon, polycarbonates, and the like, or from metals, such as stainless steel, etc. In the event cross flow is used as the force, the sides of the channels may be permeable or semipermeable material.

### SPECIFIC EMBODIMENT OF THE INVENTION

A specific embodiment of the new process and apparatus of the present invention is illustrated below.

A thin channel having the dimensions of 15cm x 2 cm x 0.38 mm (thickness) was prepared by clamping glass plates over three 0.005 inch thick spacer elements (two of teflon and one of stainless steel) as shown generally in Figures 3 and 4. The inlets for the particle substream and the particle free substream were at the top and the bottom of the inlet end respectively, and the outlets for the recovered fractions were at the top and bottom of the outlet end respectively.

A dilute aqueous suspension of 10µm and 15µm diameter polystyrene latex beads was introduced at the particle substream inlet at a rate of 0.28ml/min. An aqueous stream was introduced at the other inlet opening at a rate of 0.75 ml/min. At the outlet end, the upper substream was withdrawn at 0.75ml/min. and the lower substream at 0.28 ml/min.

The rate of introduction of the particle substream and the particle-free substream and the rates of withdrawal of substreams at the outlet end are thus adjusted such that the ratio of the flow rates in the upper substream relative to the lower substream is greater at the outlet than at the inlet.

The channel was exposed to a field force of one gravity and was oriented horizontally so that the gravitational force was perpendicular to the flow plane.

The recovered fractions recovered at the outlets were examined by microscopy which showed excellent resolution bebetween the 10µm and the 15µm particles.

## Claims

1. A continuous process for fractionating small particles and molecules in, and collecting fractions from, a special separation cell or channel formed between a set of large opposing walls (12,13) laterally enclosed by a sidewall structure (14,15,16) including an end set of walls comprising an inlet end wall (17) and an outlet end wall (18), the thickness of the channel measured between said large opposing walls being very thin compared to the other two dimensions, comprising;
continuously introducing two or more fluid substreams of different composition into two or more inlet ports (20, 21;25,26) at the inlet end (17) of said channel, bringing the substreams into contact with adjacent substreams so as to collectively form a series of thin laminae flowing parallel to one another and parallel to the surfaces of said large opposing walls of the channel and in contact with one another over a sufficient length of channel to allow a desired level of mass transport between and through the laminae, without substantial hydrodynamic mixing between the laminae, to realise the fractionation of particles and molecules along a coordinate axis extending between the set of large opposing walls (12,13) of the channel;
continuously introducing a fluid medium containing the particles to be separated as one or more of the entering fluid substreams and varying the fluid composition of the non-particle containing substream as needed to realise separation;
at the outlet end of the channel (18) splitting the collective channel stream along a plane parallel to the set of large opposing walls into another set of laminae which are then withdrawn from the channel outlet as individual substreams so as to permit separate recovery of particle fractions separated within the channel into different laminae;
continuously removing the individual substreams discharging from the channel; and
during the separating process subjecting the channel to one or more transverse driving forces or gradients (60) having a component perpendicular to the plane of the flow stream in the channel and being selected from the group consisting of gravitation, centrifugation, electrical forces, crossflow forces, temperature gradients, density gradients and concentration gradients, and combinations thereof.

2. A process as in claim 1 wherein the thickness of the channel varies from about 0.1mm to 2.0mm.

3. A process as in claim 1 wherein there are two or more of such separation cell or channels (11) joined by fluid streams in which one or more of the outlet substreams from one cell is fed to one or more of the inlet substreams of another cell or of more than one other cell.

4. A process as in claim 1 wherein one or more means (15b) are employed along the length of the channel to split the stream as it passes along the channel causing one or more of the obtained substreams to enter the following section of channel as a new substream for that section, causing other substreams to exit the channel for collection, discarding, or to enter another separation channel, and to introduce new substreams into the channel from outside the channel.

5. A process as in claim 1 wherein splitter means (15) are employed at the outlet end of the channel to split the stream into 2 substreams as it reaches the end of the channel.

6. A process as in claim 1 wherein the particles are introduced through the upper inlet substream and the flow rates of all substreams introduced at the inlet end as well as the flow rates of all of the substreams at the outlet end are varied such that the ratio of the flow rates in the upper substream relative to the lower substream or substreams is greater at the outlet end than at the inlet end and thereby creating a cross-over flow of the substreams.

7. A process as in claim 1 wherein the transverse driving force or gradient is centrifugation.

8. A process as in claim 1 wherein the transverse driving force or gradient is a temperature gradient.

9. A process as in claim 1 wherein the transverse driving force or gradient is a gradient in the fluid composition or in the concentration of a modifying material, established by introducing different compositions or different concentrations of said material into different inlet substreams.

10. A process as in claim 1 wherein the transverse driving force or gradient is a crossflow force.

11. An apparatus for separating small particles and molecules into desired fractions consisting of a separation cell or channel comprising:
a channel formed between a set of large opposing walls (12,13) laterally enclosed by a sidewall structure (14,15,16), including an end set of walls comprising an inlet end wall (17) and an outlet end wall (18), the thickness of the channel measured between said large opposing walls being very thin compared to the other two dimensions;
an inlet means (20,26) comprising two or more inlet ports (20,21;25,26) for continuously introducing two or more fluid substreams of different composition into said two or more inlet ports (20,21,25,26) at the inlet end (17) of said channel, said inlet means being so formed as to bring the substreams into contact with adjacent substreams so as to collectively form a series of thin laminae flowing parallel to one another and parallel to the surfaces of said large opposing walls of the channel and in contact with one another over a sufficient length of channel to allow a desired level of mass transport between and through the laminae, without substantial hydrodynamic mixing between the laminae, to realise the fractionation of particles and molecules along a coordinate axis extending between the set of large opposing walls (12,13) of the channel, whereby into at least one of said inlet ports (21,25) a fluid medium containing the particules to be separated is continuously introduced as one or more of the said introduced fluid substreams;
at least one means (15d) at the outlet end of the channel for splitting the channel stream along a plane parallel to the set of large opposing walls into flow laminae and permitting recovery of the laminae as separate substreams;
means for continuously removing the substreams emerging from the outlet end of the channel; and
means (60) for applying one or more transverse driving forces or gradients having a component perpendicular to the plane of the flow stream in the channel and being selected from the group consisting of gravitation, centrifugation, electrical forces, crossflow forces, temperature gradients, density gradients and concentration gradients, and combinations thereof.

12. An apparatus as in claim 11 wherein the thickness of the channel varies from about 0.1mm to 2.0mm.

13. An apparatus as in claim 11 wherein there are two or more of such separation cells or channels (11) joined by fluid streams in which one or more of the outlet substreams from one cell is fed to one or more of the inlet substreams of another cell or of more than one other cell.

14. An apparatus as in claim 11 wherein the inlet end walls and the outlet end walls within the interior of the channel converge to a point to form a narrow inlet and outlet port for the substreams.

15. An apparatus as in claim 11 wherein one or more means (15b) are present along the length of the channel to split the stream as it passes along the channel causing one or more of the obtained substreams to enter the following section of channel as a new substream for that section, causing other substreams to exit the channel for collection, discarding or to enter another separation channel, and to introduce new substreams into the channel from outside the channel.

16. An apparatus as in claim 11 wherein there is a physical splitter means (15d) present at the inlet end of the channel to bring the inlet substreams into contact with one another so as to collectively form a series of thin laminae flowing parallel to one another within the channel.

17. An apparatus as in claim 11 wherein there are from one to nine physical splitter means (36,37,38;50,51,52) at the outlet end of the channel to split the channel stream as it approaches the outlet end into different flow laminae that can be isolated as separate substreams.

18. An apparatus as in claim 11 wherein means are present to vary the flow rates of the substreams at the inlet end as well as the flow rates of the substreams at the outlet end so as to effect a cross-over flow in the channel.

19. An apparatus as in claim 11 wherein the transverse driving force or gradient is gravitation.

20. An apparatus as in claim 11 wherein the transverse driving force or gradient is a temperature gradient.

21. An apparatus as in claim 11 wherein the transverse driving force or gradient is centrifugal.

22. An apparatus as in claim 11 wherein the transverse driving force or gradient is electrical.

## Patentansprüche

1. Ein kontinuierliches Verfahren zum Fraktionieren kleiner Teilchen und Moleküle in und zum Sammeln von Bruchstücken aus einer besonderen Trennzelle oder aus einem zwischen einer Anordnung von großen, einander gegenüberliegenden Wänden (12, 13), die eine Endanordnung von Wänden mit einer Einlaßendwand (17) und einer Auslaßendwand (18) umfaßt, angeordneten Kanal, wobei die zwischen den großen, einander gegenüberliegenden Wänden gemessene Dicke des Kanals sehr dünn im Vergleich zu den beiden anderen Dimensionen ist, wobei das Verfahren umfaßt:
kontinuierliches Einspeisen von zwei oder mehreren Flüssigkeitsteilströmen unterschiedlicher Zusammensetzung in zwei oder mehrere Einlaßkanäle (20, 21; 25, 26) an dem Einlaßende (17) des Kanals, Zusammenbringen der Teilströme in Kontakt mit angrenzenden Teilströmen, um so gemeinsam eine Reihe von dünnen Schichten zu bilden, die parallel zueinander und parallel zu den Oberflächen der großen, einander gegenüberliegenden Wänden des Kanals und in Kontakt miteinander über eine ausreichende Länge des Kanals fließen, um ein gewünschtes Niveau eines Massentransportes zwischen und durch die Schichten ohne eine wesentliche hydrodynamische Mischung zwischen den Schichten zu ermöglichen, um das Fraktionieren von Teilchen und Molekülen entlang eines sich zwischen der Anordnung der großen, einander gegenüberliegenden Wänden (12, 13) des Kanals sich erstreckenden Koordinatenachse zu verwirklichen;
kontinuierliches Einspeisen eines flüssigen Mediums, das die zu trennenden Partikel enthält als einen oder mehrere der eintretenden flüssigen Teilströme und Verändern der Flüssigkeitszusammensetzung der keine Teilchen enthaltenden Teilströme entsprechend einem Bedarf, um die Trennung zu verwirklichen;
Aufteilen des kollektiven Kanalstroms entlang einer Ebene parallel zu der Anordnung von großen, einander gegenüberliegenden Wänden an dem Auslaßende des Kanals (18) in eine Anordnung von Schichten, die dann aus dem Kanalauslaß als individuelle Teilströme herausgeführt werden, um so das getrennte Gewinnen von Teilchenbruchstücken, die in dem Kanal in die unterschiedlichen Schichten getrennt worden sind, zu erlauben;
kontinuierliches Entnehmen der individuellen Teilströme, die aus dem Kanal heraustreten; und
Unterwerfen des Kanals während des Trennprozesses einer oder mehreren treibenden Kräften oder Gradienten (60) mit einer Komponente senkrecht zu der Ebene des Flußstroms in dem Kanal, die aus der aus Gravitation, Zentrifugalkraft, elektrischen Kräften, Querflußkräften, Temperaturgradienten, Dichtegradienten und Konzentrationsgradienten und Kombinationen daraus bestehenden Gruppe ausgewählt sind.

2. Ein Verfahren nach Anspruch 1, wobei die Dicke des Kanals von ungefähr 0,1 mm bis 2,0 mm sich verändert.

3. Ein Verfahren nach Anspruch 1, wobei zwei oder mehrere solcher Trennzellen oder Kanäle (11) vorhanden sind, die durch Flüssigkeitsströme verbunden sind, wobei einer oder mehrere der Auslaßteilströme von einer Zelle in eine oder mehrere Einlaßteilströme einer anderen Zelle oder in mehr als eine andere Zelle eingespeist werden.

4. Ein Verfahren nach Anspruch 1, wobei eine oder mehrere Vorrichtungen (15b) entlang der Länge des Kanals verwendet werden, um den Strom aufzuteilen, wenn er entlang des Kanals durchtritt, um zu bewirken, daß einer oder mehrere der erhaltenen Teilströme in den folgenden Abschnitt des Kanals als ein neuer Teilstrom für diesen Abschnitt eintritt, und um zu bewirken, daß andere Teilströme aus dem Kanal zum Sammeln, zum Ausscheiden oder zum Eintreten in einen anderen Trennkanal austreten, und um neue Teilströme in den Kanal von außerhalb des Kanals einzuspeisen.

5. Ein Verfahren nach Anspruch 1, wobei eine Aufspaltvorrichtung (15) am Auslaßende des Kanals verwendet wird, um den Strom in zwei Teilströme aufzuspalten, wenn er das Ende des Kanals erreicht.

6. Ein Verfahren nach Anspruch 1, wobei die Teilchen über den oberen Einlaßteilstrom eingespeist werden und die Flußraten sämtlicher in das Einlaßende eingespeister Teilströme wie auch die Flußraten sämtlicher Teilströme an dem Auslaßende variiert werden, so daß das Verhältnis der Flußraten in dem oberen Teilstrom relativ zu dem unteren Teilstrom oder Teilströmen am Auslaßende größer ist als am Einlaßende, wodurch ein Querüberfluß der Teilströme erzeugt wird.

7. Ein Verfahren nach Anspruch 1, wobei die transversale treibende Kraft oder Gradient eine Zentrifugalkraft ist.

8. Ein Verfahren nach Anspruch 1, wobei die transversale treibende Kraft oder der Gradient ein Temperaturgradient ist.

9. Ein Verfahren nach Anspruch 1, wobei die transversale Kraft oder der Gradient ein Gradient in der Flüssigkeitszusammensetzung oder in der Konzentration eines abwandelnden Materials ist, der durch Einspeisen unterschiedlicher Zusammensetzungen oder unterschiedlicher Konzentrationen dieses Materials in unterschiedlichen Einlaßteilströmen geschaffen wird.

10. Ein Verfahren nach Anspruch 1, wobei die transversale treibende Kraft oder der Gradient eine Querflußkraft ist.

11. Eine Vorrichtung zum Trennen kleiner Teilchen und Moleküle in gewünschte Bruchstücke mit einer Trennzelle oder einem Kanal, die umfaßt:
einen zwischen einer Anordnung von großen, einander gegenüberliegenden Wänden (12, 13), die durch einen Seitenwandaufbau (14, 15 16) seitlich umgeben sind, gebildeten Kanal mit einer Endwandanordnung mit einer Einlaßendwand (17) und einer Auslaßendwand (18), wobei die zwischen den großen, einander gegenüberliegenden Wänden gemessene Dicke des Kanals sehr dünn im Vergleich zu den anderen beiden Dimensionen ist;
eine Einlaßvorrichtung (20, 26) mit zwei oder mehreren Einlaßkanälen (20, 21; 25, 26) zum kontinuierlichen Einspeisen zweier oder mehrerer Flüssigkeitsteilströme unterschiedlicher Zusammensetzung in die zwei oder mehreren Einlaßkanäle (20, 21; 25, 26) an dem Einlaßende (17) des Kanals, wobei die Einlaßvorrichtung so ausgebildet ist, daß die Teilströme in Kontakt mit angrenzenden Teilströmen gebracht werden, um so gemeinsam eine Reihe von dünnen Schichten zu bilden, die parallel zueinander und parallel zu den Oberflächen der großen, einander gegenüberliegenden Wänden des Kanals und in Kontakt miteinander über eine ausreichende Länge des Kanals fließen, um ein gewünschtes Niveau eines Massentransports zwischen und durch die Schichten ohne eine wesentliche hypodynamische Mischung zwischen den Schichten zu ermöglichen, um die Fraktionierung von Teilchen und Molekülen entlang einer sich zwischen der Anordnung der großen, einander gegenüberliegenden Wänden (12, 13) des Kanals erstreckenden Koordinatenachse zu verwirklichen, wodurch in wenigstens einem der Einlaßkanäle (21, 25) ein flüssiges Medium, das die zu trennenden Teilchen enthält, kontinuierlich als einer oder mehrere der eingeführten Flüssigkeitsteilströme eingespeist wird;
wenigstens eine Vorrichtung (15d) an dem Auslaßende des Kanals zum Aufteilen des Kanalstroms entlang einer Ebene parallel zu der Anordnung der großen, einander gegenüberliegenden Wände in Flußschichten und um eine Wiedergewinnung der Schichten als getrennte Teilströme zu ermöglichen;
eine Vorrichtung zum kontinuierlichen Entnehmen der aus dem Auslaßende des Kanals austretenden Teilströme; und
eine Vorrichtung (60) zum Anwenden von einer oder mehreren transversalen treibenden Kräften oder Gradienten mit einer Komponente senkrecht zu der Ebene des Flußstroms in dem Kanal, die aus der aus Gravitation, Zentrifugalkraft, elektrischen Kräften, Querflußkräften, Temperaturgradienten, Dichtegradienten und Konzentrationsgradienten und Kombinationen daraus bestehenden Gruppe ausgewählt sind.

12. Eine Vorrichtung nach Anspruch 11, wobei die Dicke des Kanals von ungefähr 0,1 mm bis 2,0 mm sich verändert.

13. Eine Vorrichtung nach Anspruch 11, wobei es zwei oder mehrere solcher Trennzellen oder Kanäle (11) gibt, die durch Flüssigkeitsströme verbunden sind, wobei einer oder mehrere der Auslaßteilströme aus einer Zelle in eine oder mehrere der Einlaßteilströme einer anderen Zelle oder von mehr als einer anderen Zelle eingespeist werden.

14. Eine Vorrichtung nach Anspruch 11, wobei die Einlaßendwände und die Auslaßendwände in dem Innenbereich des Kanals auf einen Punkt zulaufen, um einen schmalen Einlaßund Auslaßkanal für die Teilströme zu bilden.

15. Eine Vorrichtung nach Anspruch 11, wobei eine oder mehrere Vorrichtungen (15b) entlang der Länge eines Kanals vorhanden sind, um den Strom aufzuteilen, wenn er entlang des Kanals sich bewegt, um zu bewirken, daß einer oder mehrere der erhaltenen Teilströme in den nachfolgenden Abschnitt des Kanals als ein neuer Teilstrom für diesen Abschnitt eintreten, wodurch bewirkt wird, daß andere Teilströme den Kanal zum Sammeln, Auslassen oder zum Eintreten in einen anderen Trennkanal verlassen, und um neue Teilströme in den Kanal von außerhalb des Kanals einzuspeisen.

16. Eine Vorrichtung nach Anspruch 11, wobei eine physikalische Aufspaltvorrichtung (15d) vorgesehen ist, die an dem Einlaßende des Kanals vorhanden ist, um die Einlaßteilströme in Kontakt miteinander zu bringen, so daß sie kollektiv eine Reihe von dünnen Schichten bilden, die parallel zueinander in dem Kanal fließen.

17. Eine Vorrichtung nach Anspruch 11, wobei zwischen einer und neun physikalische Aufspaltvorrichtungen (36, 37, 38; 50, 51, 52) an dem Auslaßende des Kanals vorgesehen sind, um den Kanalstrom in unterschiedliche Flußschichten, die als getrennte Teilströme isoliert werden können, aufzuspalten, wenn er sich dem Auslaßende annähert.

18. Eine Vorrichtung nach Anspruch 11, wobei eine Vorrichtung vorhanden ist, um die Flußraten der Teilströme an dem Einlaßende und auch die Flußraten der Teilströme an dem Auslaßende zu verändern, um so einen Querüberfluß in den Kanal zu bewirken.

19. Eine Vorrichtung nach Anspruch 11, wobei die transversale treibende Kraft oder der Gradient die Gravitation ist.

20. Eine Vorrichtung nach Anspruch 11, wobei die transversale treibende Kraft oder der Gradient ein Temperaturgradient ist.

21. Eine Vorrichtung nach Anspruch 11, wobei die transversale treibende Kraft oder der Gradient die Zentrifugalkraft ist.

22. Eine Vorrichtung nach Anspruch 11, wobei die transversale treibende Kraft oder der Gradient elektrisch ist.

## Revendications

1. Procédé en continu pour fractionner des petites particules et des molécules et pour en extraire des fractions, dans une cellule de séparation spéciale ou canal formé entre un jeu de grandes parois opposées (12, 13) enfermées latéralement dans une structure de parois latérales (14, 15, 16) comprenant un jeu de parois d'extrémité incluant une paroi d'extrémité d'entrée (17) et une paroi d'extrémité de sortie (18) l'épaisseur du canal mesurée entre lesdites grandes parois opposées étant mince comparée aux deux autres dimensions, et comportant les étapes qui consistent:
- à introduire en continu deux ou plusieurs flux secondaires de compositions différentes dans deux ou plusieurs lumières d'entrée (20, 21, 25, 26) à l'extrémité d'entrée (17) dudit canal, amenant les flux secondaires en contact avec des flux secondaires adjacents de manière à former collectivement une série de couches minces s'écoulant parallèlement l'une à l'autre et parallèles aux surfaces desdites grandes parois opposées du canal, et en contact l'une avec l'autre sur une longueur suffisante du canal pour permettre un transport de masse de niveau désiré entre et à travers les couches, sans donner lieu à un mélange hydrodynamique sensible entre les couches, afin de réaliser le fractionnement des particules et des molécules le long d'un axe de coordonnée s'étendant entre le jeu des grandes parois opposées (12, 13) du canal;
- à introduire en continu un agent fluide contenant les particules devant être séparées sous forme d'un ou plusieurs des flux secondaires de fluide entrant, et en faisant varier suivant les besoins la composition du flux secondaire ne contenant pas de particules pour réaliser la séparation;
- à scinder, à l'extrémité de sortie (18) du canal, le flux du canal collectif suivant un plan parallèle au jeu des grandes parois opposées, en un autre ensemble de couches qui sont alors retirées à partir de la sortie du canal sous forme de flux secondaires individuels de manière à permettre la récupération indépendante de fractions de particules séparées à l'intérieur du canal sous forme de couches différentes;
- à retirer en continu les flux secondaires individuels déchargés à partir du canal ;
- et à soumettre le canal, au cours de l'opération de séparation, à une ou plusieurs forces ou gradients (60) d'entraînement ayant une composante perpendiculaire au plan du flux d'écoulement dans le canal, et sélectionnés à partir d'un groupe constitué par la gravitation, la force centrifuge, des forces électriques, des forces de courant transversal, des gradients de température, des gradients de densité, des gradients de concentration, et des combinaisons des forces et gradients mentionnés ci-dessus.

2. Procédé selon la revendication 1 dans lequel l'épaisseur du canal varie d'environ 0.1 mm à 2.0 mm

3. Procédé selon la revendication 1 comportant deux ou plusieurs de tels cellules ou canaux (11) de séparation réunis par des flux de fluide dans lesquels un ou plusieurs des flux secondaires de sortie provenant d'une cellule alimentent un ou plusieurs des flux secondaires d'entrée d'une autre cellule ou de plus d'une autre cellule.

4. Procédé selon la revendication 1 suivant lequel un ou plusieurs moyens (15b) sont employés sur la longueur du canal pour scinder le flux pendant son passage le long du canal, amenant un ou plusieurs des flux secondaires obtenus à entrer dans la section suivante du canal sous forme d'un nouveau flux secondaire pour cette section, amenant d'autres flux secondaires à sortir du canal en vue de leur collecte, de leur rebut ou de leur entrée dans un autre canal de séparation et à introduire de nouveaux flux secondaires dans le canal depuis l'extérieur de celui-ci.

5. Procédé selon revendication 1 dans lequel des moyens (15) de fractionnement sont employés à l'extrémité de sortie du canal pour scinder le flux en deux flux secondaires au moment où il atteint l'extrémité du canal.

6. Procédé selon la revendication 1 dans lequel les particules sont introduites à travers le flux secondaire d'entrée supérieur et où l'on fait varier les débits de tous les flux secondaires introduits à l'extrémité d'entrée ainsi que les débits de tous les flux secondaires à l'extrémité de sortie, de telle sorte que le rapport des débits du flux secondaire supérieur et du flux secondaire ou des flux secondaires inférieurs soit plus élevé à l'extrémité de sortie qu'à l'extrémité d'entrée, créant ainsi un écouelment corisé des flux secondaires.

7. Procédé selon la revendication 1 dans lequel la force ou le gradient d'entraînement transversal est une force centrifuge.

8. Procédé selon la revendication 1 dans lequel la force ou le gradient d'entraînement est un gradient de température.

9. Procédé selon la revendication 1 dans lequel la force ou le gradient d'entraînement transversal est un gradient de composition de fluide ou de concentration d'un matériau de modification, établi en introduisant des compositions différentes ou des concentrations différentes dudit matériau dans différents flux secondaires d'entrée.

10. Procédé selon la revendication 1 dans lequel la force ou le gradient d'éntraînement est une force de courant transversal.

11. Appareil pour séparer de petites particules ou molécules en fractions désirées, constitué par une cellule ou canal de séparation et comportant:
- un canal formé entre un jeu de grandes parois opposées (12, 13) enfermées latéralement par une structure de parois latérales (14, 15, 16) incluant un jeu de parois d'extrémité comprenant une paroi d'extrémité d'entrée (17) et une paroi d'extrémité de sortie (18), l'épaisseur du canal mesurée entre lesdites grandes parois opposées étant très mince comparée aux deux autres dimensions;
- un moyen d'entrée (20, 26) comportant deux ou plusieurs lumières d'entrée (20, 21; 25, 26) pour introduire en continu deux ou plusieurs flux secondaires de fluide de compositions différentes dans lesdites deux ou plusieurs lumières d'entrée (20, 21; 25, 26) à l'extrémité d'entrée (17) dudit canal, lesdits moyens d'entrée étant formés de manière à amener les flux secondaires en contact avec des flux secondaires adjacents afin de former collectivement une série de couches minces s'écoulant parallèlement l'une à l'autre et parallèlement aux surfaces desdites grandes parois opposées du canal et en contact l'une avec l'autre sur une longueur suffisante du canal pour permettre un transport de masse d'un niveau désiré entre les couches et à travers celles-ci, sans donner lieu à un mélange hydrodynamique sensible entre les couches, afin de réaliser le fractionnement des particules et des molécules suivant un axe de coordonnée s'étendant entre le jeu de grandes parois opposées (12, 13) du canal, permettant d'introduire en continu dans au moins une desdites lumières d'entrée (21, 25) un agent fluide contenant les particules devant être séparées sous forme d'un ou de plusieurs desdits flux secondaires de fluide introduits;
- au moins un moyen (15d) situé à l'extrémité de sortie du canal pour fractionner le flux du canal le long d'un plan parallèle au jeu des grandes parois opposées, en couches en écoulement et permettant de récupérer les couches sous forme de flux secondaires séparés;
- des moyens pour retirer en continu des flux secondaires qui émergent de l'extrémité de sortie du canal; et
- des moyens (60) pour appliquer un ou plusieurs forces ou gradients d'entraînement transversaux ayant une composante perpendiculaire au plan du flux en écoulement dans le canal, et sélectionnés parmi le groupe constitué par la gravitation, la force centrifuge, des forces électriques, des forces de courant transversal, des gradients de température, des gradients de densité et des gradients de concentration, et des combinaisons des forces et gradients mentionnés ci-dessus.

12. Appareil selon la revendication 11 dans lequel l'épaisseur du canal varie d'environ 0,1 mm à 2 mm.

13. Appareil selon la revendication 11 comportant deux ou plusieurs de ces cellules ou canaux de séparation (11) reliés Par des flux de fluide dans lesquels un ou plusieurs des flux secondaires de sortie provenant d'une cellule alimente un ou plusieurs des flux secondaires d'entrée d'une autre cellule ou de plus d'une autre cellule.

14. Appareil selon la revendication 11 dans lequel les parois d'extrémité d'entrée et les parois d'extrémité de sortie dans la partie intérieure du canal convergent en un point pour former une lumière d'entrée et de sortie étroite pour les flux secondaires.

15. Appareil selon la revendication 11 comportant un ou plusieurs moyens (15b) sur la longueur du canal pour scinder le flux pendant son passage dans le cap amenant un ou plusieurs des flux secondaires obtenus à pénétrer dans la section suivante du canal sous forme d'un nouveau flux secondaire pour cette section, amenant d'autres flux secondaires à sortir du canal pour être collectés, rebutés ou à pénétrer dans un autre canal de séparation, et pour introduire de nouveaux flux secondaires dans le canal depuis l'extérieur de celui-ci.

16. Appareil selon la revendication 11, comportant un moyen de fractionnement physique (15d) situé à l'extrémité d'entrée du canal pour mettre les flux secondaires d'entrée en contact l'un avec l'autre de manière à former collectivement une série de couches minces s'écoulant parallèlement l'une à l'autre à l'intérieur du canal.

17. Appareil selon la revendication 11 comportant un à neuf moyens de fractionnement physiques (36, 37, 38; 50, 51, 52) situés à l'extrémité de sortie du canal pour scinder le flux dans le canal, lorsque le flux s'approche de l'extrémité de sortie, en différentes couches en écoulement qui peuvent être isolées sous forme de flux secondaires indépendants.

18. Appareil selon la revendication 11 comportant des moyens pour faire varier les débits des flux secondaires à l'extrémité d'entrée ainsi que les débits des flux secondaires à l'extrémité de sortie de manière à produire un écoulement croisé dans le canal.

19. Appareil selon la revendication 11 dans lequel la force ou le gradient d'entraînement transversal est la gravitation.

20. Appareil selon la revendication 11 dans lequel la force ou le gradient d'entraînement transversal est un gradient de température.

21. Appareil selon la revendication 11 dans lequel la force ou le gradient d'entraînement transversal est une force centrifuge.

22. Appareil selon la revendication 11 dans lequel la force ou le gradient d'entraînement transversal est électrique.
